# EUROPEAN PATENT APPLICATION

(11) **EP 1 158 798 A1**
(43) Date of publication of application: **28.11.2001**
(21) Application number: 00307173.5
(22) Date of filing: 21.08.2000
(51) Int. Cl.: H04N 7/08, H04H 1/00

(54) **Method and device for the reception of broadcast contents by subscribers**

(30) Priority: 25.05.2000 EP 00304473
(71) Applicant: LUCENT TECHNOLOGIES INC., Murray Hill, New Jersey 07974-0636 (US)
(72) Inventor: Gruhl, Stefan, 90443 Nurnberg (DE); Reichenbach, Joerg Arnt, 90402 Nurnberg (DE)
(74) Representative: Buckley, Christopher Simon Thirsk

(57) **Abstract**

The invention relates to a method which is new and improved compared with the prior art, and to a device adapted thereto, for the reception of broadcast contents by subscribers which provide both for the reception of traditional broadcast programmes and for direct subscriber-specific consideration in the assembly of programmes.

To this end, it is provided to separate at least one first signal sequence with information blocks ("a" to "k") embedded therein from a number of broadcast signal sequences (3, 5, 6, 7, 8, 9) having defined signal characteristics, optionally to store the information blocks ("a" to "k") obtained and to access information blocks ("a" to "k") embedded in the first signal sequence and/or stored, in dependence on chaining information, in such a manner that information blocks combined in accordance with the chaining information are supplied to a reproduction device. A correspondingly adapted device according to the invention comprises a receiving device (24) for separating at least the first signal sequence, a device (25) for storing information blocks ("a" to "k") and a processor device (26) which, in dependence on chaining information, controls a selection device (27) for accessing information blocks ("a" to "k") embedded in the signal sequence and/or stored, in such a manner that information blocks ("a" to "k") selected in accordance with the chaining information can be successively supplied to a reproduction device.

## Description

The invention relates to a method and a device for the reception of broadcast contents by subscribers.

Traditional entertainment and/or information programmes such as are radiated, for example, by radio transmitters or television transmitters, are normally transmitted as broadcasts. In this method, a predetermined sequence of entertainment and/or information programme units is transmitted to a particular class of receiving equipment from a transmitter or a source, respectively. In the aforementioned case of radio or television transmissions, these can thus be received by an essentially unlimited group of people.

Thus, an individual subscriber forming part of the group of people has available in the simplest manner a wide range of various programme units, assembled to form a programme, which can be consumed by said subscriber without the latter becoming actively involved in the assembly of a programme. Unlike, for example, multimedia sources known via the Internet, broadcasts thus represent a comfortable, and therefore appreciated type of consumption.

Although it must be expected that the demand for entertainment and/or information transmissions by means of traditional broadcast programmes will also be maintained in future if not increased for reasons of the aforementioned comfort, the traditional broadcast programmes have disadvantages especially with respect to a necessary adaptation to individual subscriber wishes. It is thus desirable that greater attention be paid to individual wishes of individual subscribers with respect to a selection from a given range on offer in times of increasing diversity of information.

A further disadvantage can be seen in the fact that, even if the subscriber is receiving a broadcast programme as a predetermined sequence of individual entertainment and/or information programme units, he does not have any direct access to the programme units as such. This is because in conventional broadcast systems which provide predetermined programme sequences to the group of people, the subscriber has hitherto only been able to select one of these predetermined programme sequences.

In contrast to this, systems are known in which the service consists in providing pure information and/or entertainment contents at the request of a subscriber. Examples of this are the World Wide Web (WWW) via the Internet or video services on request. Another method of providing information consists in offering access to information and/or entertainment transmissions to a limited group of people via a membership scheme.

To ensure, in the age of increasing diversity of information, a much more efficient utilization of available transmission channels for broadcast programmes and, at the same time, provide an individual subscriber with a more individual selection of a special broadcast programme, it is also provided, in accordance with an earlier patent application of the same applicant which is being referred to in its full extent, that a broadcast programme is radiated by means of separate transmission of the individual information and/or entertainment units, generally called information units in the text which follows, and the predetermined programme structure. This makes it possible for individual information units provided to be referred to, i.e. to be accessed by referencing, a number of times for forming a number of different programmes by correspondingly allocated programme structures embedded within a further signal sequence.

Thus, a multiplicity of more specialized programmes can be assembled taking into consideration the most varied types of interest even in broadcast programmes without having to increase the required bandwidth significantly. Although a subscriber can thus make a more individual selection of a special broadcast programme, the selection is essentially restricted to a sequence of information units predetermined by a transmitter or by a source without being able to directly access selectively individual selected information units.

It is, therefore, an object of the invention to demonstrate a method which is new and improved compared with the prior art, and a device adapted thereto, for the reception of broadcast contents by subscribers which provide both for the reception of traditional broadcast programmes and for direct subscriber-specific consideration in the assembly of programmes.

The solutions to the object set according to the invention are already reproduced by a method having the features of independent Claim 1 and by a device having the features of the independent Claim 6.

Advantageous and preferred further developments and/or embodiments of the invention are a subject-matter of the respective dependent claims.

Accordingly, provision is made according to the invention, for the reception by subscribers of broadcast contents which are transmitted by utilizing broadcast signal sequences in the form of embedded data or information blocks, to separate at least one first signal sequence with data or information blocks embedded therein from a number of broadcast signal sequences having defined signal characteristics which are intended for reception by receiver or reproduction devices adapted thereto, to store such information blocks, if necessary, and, for reproducing a subscriber-related required sequence of broadcast contents, to access data or information blocks embedded in the first signal sequence and/or stored, in dependence on chaining information, in such a manner that information blocks combined in accordance with the chaining information are supplied to a reproduction device.

Due to the fact that individual data or information blocks are only assembled by the receiver device connected by the subscriber to form a broadcast programme comprising successive information units, i.e. for a reproduction in a certain order or sequence which can be selected by a linking rule, the invention makes it possible for the first time in the field of broadcasts for a subscriber to have both direct access to the individual information units composed of one or more data or information blocks and, at the same time, for possible reception and reproduction of these units within a programme structure to be ensured which corresponds to those of traditional broadcast programmes. Furthermore, a multiplicity of programmes can be assembled directly by the subscriber from a limited number of information units depending on the chaining information or linking rule used.

In consequence, this combines the advantages of previously customary broadcasts with a sequence of information units predetermined by the transmitter with the advantages of pure request services in the field of information and/or entertainment services. Depending on the degree of interaction desired by the subscriber, the subscriber is thus able to reproduce broadcast contents by means of corresponding chaining information in the form of traditional predetermined broadcast programmes, extending to the ability of directly accessing selectively, i.e. individually selected, information contents and assembling these correspondingly to form a programme in accordance with a chaining information item.

To receive or reproduce broadcast contents in the form of traditional broadcast programmes, the receiver device is suitably constructed in such a manner that it is capable of separating from the number of broadcast signal sequences having defined signal characteristics at least one second signal sequence with chaining information embedded therein and referring to individual information blocks. To assemble individual programmes tailored to an individual subscriber, it is also provided for the receiver device to comprise a device for the subscriber-based generation of individual chaining information items which, depending on the design, provides for a corresponding range of possible variations in the assembly of an individual programme.

In particular, to ensure that the individual subscriber has access to or can select information units in a simple manner, provision is made according to the invention, for identifying the individual information blocks in a suitable manner, to extract and, respectively, to store from the first signal sequence identification information items in each case allocated to and especially impressed on the information blocks embedded therein, which identification information items contain information on the respective specific information content and/or with respect to a classification of the information block.

Advantageously it is also intended to ensure a subscriber-based retrievable storage of chaining and/or identification information items so that it is possible repeatedly to access chaining and/or identification information items already entered or received, if necessary.

The provision of a processor device which is coupled to a device for subscriber-based selection of individual chaining information items enables the subscriber selectively to handle, especially to select, to suppress and/or to exchange, by retrieving information units stored or possibly received in parallel, information units with respect to assembling a programme.

In the text which follows, the invention will be described in detail by means of preferred illustrative embodiments, referring to the attached drawings, in which:
- Figure 1: shows the diagrammatic representation of a first illustrative embodiment according to the invention of a method for the reception of broadcast contents by subscribers in accordance with the invention, and
- Figure 2: shows the diagrammatic representation of a second illustrative embodiment according to the invention including a detailed diagram of a receiver device according to the invention.

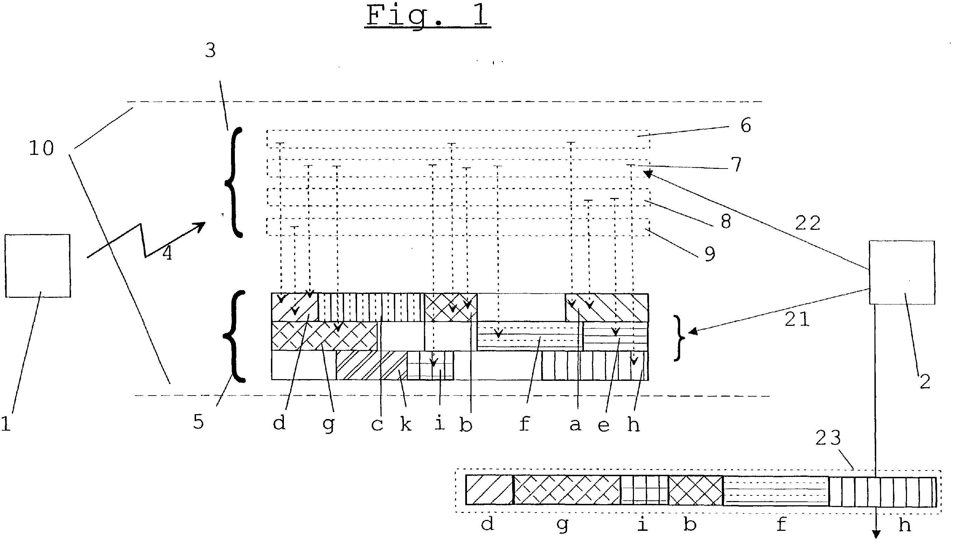

Before describing the principle of reception of broadcast information contents a) to k) according to the invention by means of the illustrative embodiment shown diagrammatically in Figure 1, in the text which follows, it should first be pointed out that the disclosure of the prior and priority-substantiating Patent Application 00 304 473.2 by the same applicant, which has already been mentioned above, is used as reference in its full extent and must therefore be considered as a component part of the present disclosure.

According to the illustrative embodiment of Figure 1, broadcasts 4, which can be received by a receiver device 2 connected at the subscriber's end and adapted in accordance with a defined class of receiving equipment, are transmitted from a transmitter or, respectively, a source 1, to a group of subscribers of essentially arbitrary size. The broadcasts 4 are transmitted in this case by utilizing a number of broadcast signal sequences having defined signal characteristics, in which case the broadcast signal sequences of the broadcasts 4 can be divided essentially into two subunits 3 and 5 to be transmitted, for reasons of better understanding.

One subunit 5 comprises signal sequences having a multiplicity of information blocks "a" to "k" embedded therein, each information block representing a complete information unit such as, for example, a message, a commentary, a piece of music or another type of report in the present example. However, it should be pointed out that such a complete information unit can also be composed of a number of information blocks, especially if a packet or packet-switching mode of transmission is used.

A further subunit 3 contains signal sequences 6 to 9 which in each case represent a sequence of individual information units, predetermined by the transmitter 1, in accordance with a predetermined programme structure. To this end, the signal sequences 6 to 9 essentially comprise control information items which refer to individual information blocks as is indicated by the arrows shown dashed in Figure 1.

The control information items or data of the signal sequences 6, 7, 8 and 9 thus require a much narrower transmission bandwidth in relation to the referenced information blocks "a" to "k" which are embedded in the signal sequences forming the subunit 5. In consequence it is possible, as in the illustrative embodiment according to Figure 1, in the case of a jointly used transmission channel 10 having adequate total bandwidth for transmitting a certain number of signal sequences forming subunits 3 and 5, to use this transmission channel 10 with increasing efficiency the more frequently individual information blocks "a" to "k" can be referenced.

A receiver device 2 adapted for receiving the broadcast signal sequences forming the subunits 3 and 5 separates a number of signal sequences, which can be allocated to subunit 5, with the information blocks "a" to "k" embedded therein, as is indicated by the arrow marked by reference number 21 in Figure 1, in the illustrative embodiment of Figure 1. In the receiver device 2, individual information blocks are subsequently correspondingly combined to form a programme 23 on the basis of chaining information and are supplied to a reproduction device, not shown.

In the present illustrative embodiment, the programme structure of the signal sequence 7 to be allocated to subunit 3 is used for the chaining information items necessary for this as is indicated by the arrow marked by reference number 22. In accordance with the programme structure contained in signal sequence 7 and used as chaining information, with control data referring to information blocks "h", "f", "b", "i", "g" and "d", the composite programme 23 which is supplied to the reproduction device consists of a sequence of just these information blocks "h", "f", "b", "i", "g" and "d".

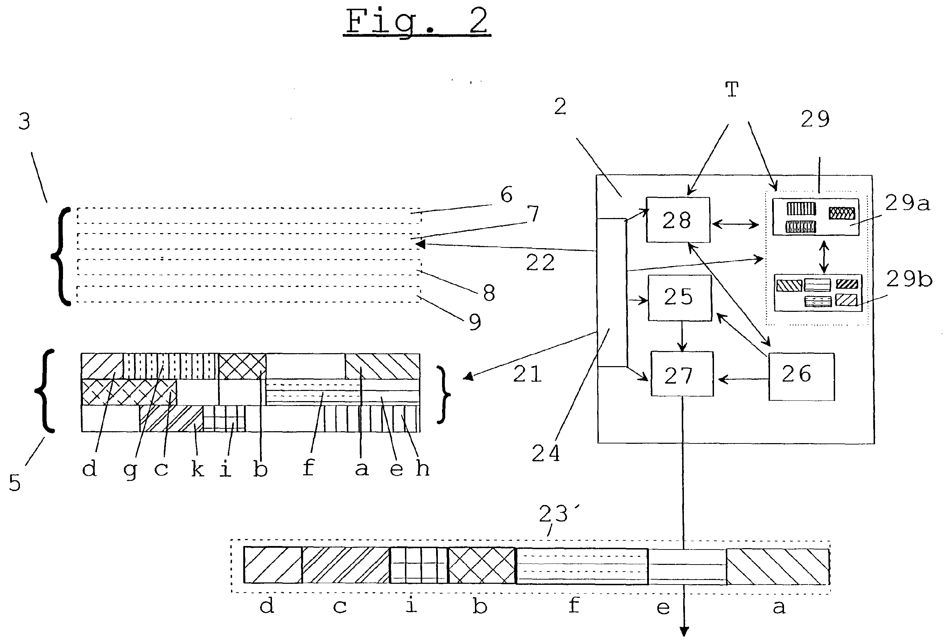

Since the transmission of the signal sequences to be allocated to subunit 5 and containing the information blocks embedded therein takes place asynchronously in the present illustrative embodiment as can be seen in Figure 1, the receiver device 2, as drawn in detail in Figure 2, needs a storage device 25 (Figure 2) by means of which received information blocks, but especially information blocks "f", "b", "i", "g" and "d" can be temporarily stored retrievably in the present illustrative embodiment.

However, it should be pointed out that temporary storage is not absolutely mandatory depending on the chaining information used and on the information blocks embedded in one or a number of signal sequences and to be chained to one another.

In the illustrative embodiment according to Figure 2, a receiver device 2 is diagrammatically drawn in detail. As indicated by the arrow marked by reference number 21, a device 24 of the receiver device 2 separates at least one signal sequence, to be allocated to subunit 5, with information blocks "a" to "k" embedded therein and supplies it under the control of a processor device 26 to a storage device 25 and/or a selection device 27 as will be described in detail in the text which follows. Furthermore, the device 24 is constructed for separating at least one signal sequence to be allocated to subunit 3, the signal sequence 7 again in the present example, with the programme structures embedded therein, and supplies it to a device 28 for the retrievable storage of chaining information. In addition, chaining information to be stored in the device 28, as indicated by the letter "T", can be additionally generated by the subscriber himself.

Depending on chaining information stored in the storage device 28, the processor device 26 controls the selection device 27 in such a manner that it selects, depending on the corresponding chaining information, a referenced information block by accessing a separated information block and/or an information block stored retrievably in the storage device 25 selectively for further processing.

In the present example of Figure 2, the receiver device 2 also comprises a device 29 for extracting or, respectively, storing identification data or information allocated to individual information blocks. Such identification data especially contain information on the specific content of a respective information block and/or on the class to which an information block can be allocated, and practically follow a standard which already exists or is still to be developed.

If such identification data are allocated to the individual information blocks "a" to "k" of the signal sequences forming the subunit 5, for example by being impressed, this provides for a much simplified and especially also programmable selection of certain information units and/or classes of information units such as, for example, sport or classical music.

In the example according to Figure 2, the device 29 is constructed in such a manner that identification information which can be stored therein and follows a standard can be additionally generated by the subscriber himself as indicated by the letter "T". The subscriber can thus store especially preferred and/or less preferred information units consisting of one or more composite information blocks by generating such identification information within an application-specifically predetermined framework.

Assuming that then the chaining information essentially consists of the programme structure of the separated signal sequence 7 as in the illustrative embodiment of Figure 1, when an information block referenced by the chaining information is detected which has been identified as "unwanted" by the subscriber by generating corresponding identification data, this block is, for example, replaced by or exchanged for an identification block identified as "wanted" by the subscriber.

Thus, for example, the reference symbol 29a in the embodiment of Figure 2 stands for identification data stored in the device 29 which identify associated information blocks as "unwanted", and the reference symbol 29b stands for identification data stored in the device 29 which identify associated information blocks as "wanted".

Correspondingly, the information blocks "h", "g" and "c" in Figure 2 are identified as "unwanted" (reference number 29a) by means of associated identification information stored in the device 29, and the information blocks "a", "e", "f", "k" and "d" are identified as "wanted" information blocks in accordance with generated identification information (reference number 29b). If the chaining information stored in the device 28 refers to information block "h", "g" and/or "c", the latter can thus be exchanged for one or more of the information blocks "a", "e", "f", "k" and "d" under subscriber-based control.

In consequence, a modified programme 23' can be assembled as a result by the selection device 27 under the control of the processor device 26 in dependence on the chaining information 28 and taking into consideration the stored identification data 29. In the present example according to Figure 2, the information block "h" was replaced by information blocks "a" and "e" and information block "g" by information block "c" in comparison with programme 23 of Figure 1.

As already described above, the chaining information contained in the device 28 can also be influenced by the subscriber as indicated by the letter "T". Thus, the subscriber can input, for example, an individual frame structure and provide weighting to various programme contents in accordance with his own requirements. It is thus possible, for example, to assemble the chaining information in such a manner that a programme with a broadcast character consists of 80% music, 10% entertainment and 10% news.

Depending on the special embodiment of the receiver device 2, it is possible to access prestored information blocks, identification data and/or stored variations of chaining information within certain time windows which can amount to a few minutes or also provide for essentially unlimited retrievable storage.

Due to the subscriber-based generation of chaining data and/or identification data, the subscriber can thus himself predetermine the required degree of interaction during the reception and reproduction of broadcast contents which, for example, also ensures that the subscriber can perform an instant access to one or more selected and prestored programme contents.

## Claims

1. Method for the reception by subscribers of broadcast contents which are transmitted by utilizing broadcast signal sequences having defined signal characteristics which are intended for the reception of receiver devices (2) adapted thereto, comprising the following steps:
separating at least one first signal sequence with information blocks ("a" to "k") embedded therein from a number of broadcast signal sequences (3, 5, 6, 7, 8, 9) having defined signal characteristics,
optionally storing information blocks ("a" to "k"),
obtaining a chaining information item:
accessing information blocks ("a" to "k") embedded in the first signal sequence and/or stored, in dependence on the chaining information, in such a manner that information blocks combined in accordance with the chaining information are supplied to a reproduction device.

2. Method according to Claim 1, **characterized in that** the chaining information is obtained by separating a second signal sequence (6, 7, 8, 9) with control data embedded therein and referring to individual information blocks ("a" to "k") from the number of broadcast signal sequences (3, 5, 6, 7, 8, 9) having defined signal characteristics and/or by subscriber-based generation at the receiving end.

3. Method according to Claim 1 or 2, **characterized in that**, for identifying the respective specific information content of an information block and/or for classifying an information block ("a" to "k"), identification information in each case allocated to the information blocks embedded in the first signal sequence is extracted from the first signal sequence.

4. Method according to one of Claims 1 to 4, **characterized by** subscriber-based storage of chaining and/or identification information.

5. Method according to one of Claims 1 to 5, **characterized in that** one chaining information item is replaced in a subscriber-based manner by another one.

6. Device for the reception of broadcast contents by subscribers, comprising
a receiving device (24) for separating at least one signal sequence with information blocks ("a" to "k") embedded therein from a number of broadcast signal sequences (3, 5, 6, 7, 8, 9) having defined signal characteristics,
a device (25) for storing information blocks ("a" to "k")
a processor device (26) which, in dependence on predetermined chaining information, controls a selection device (27) for accessing information blocks ("a" to "k") embedded in the signal sequence and/or stored, in such a manner that information blocks ("a" to "k") selected in accordance with the chaining information can be successively supplied to a reproduction device.

7. Device according to Claim 6, **characterized in that** the receiving device (24) is constructed for separating at least one second signal sequence (6, 7, 8, 9) with control data embedded therein and referring to individual information blocks ("a" to "k") from the number of broadcast signal sequences having defined signal characteristics, especially for obtaining the chaining information.

8. Device according to one of Claims 6 to 7, **characterized by** a device (28) for the retrievable storage of chaining information.

9. Device according to one of Claims 6 to 8, **characterized by** a device (29) for storing identification data allocated to a respective information block ("a" to "k") and especially identification data extracted from the first signal sequence.

10. Device according to one of Claims 6 to 9, **characterized by** a device ("T") for the subscriber-based generation of chaining information and/or identification data allocated to individual information blocks.

11. Device according to one of Claims 6 to 10, **characterized in that** the processor device (26) is coupled to the storage devices (25, 28, 29) for the subscriber-based selection and/or exchange of individual information blocks, chaining information and/or identification data.
